# DEMANDE DE BREVET EUROPEEN

(11) **EP 4 109 772 A1**
(43) Date de publication de la demande: **28.12.2022**
(21) Numéro de dépôt: 22179526.3
(22) Date de dépôt: 17.06.2022
(51) Int. Cl.: H04B 5/00

(54) **ALIMENTATION D'UN DISPOSITIF ÉLECTRONIQUE**

(30) Priorité: 24.06.2021 FR 2106785
(71) Demandeur: STMicroelectronics (Rousset) SAS, 13790 Rousset (FR)
(72) Inventeur: TRAMONI, Alexandre, 83330 LE BEAUSSET (FR)
(74) Mandataire: Cabinet Beaumont

(57) **Abrégé**

La présente description concerne un dispositif électronique comprenant :
- un premier module de communication en champ proche (34) ;
- au moins un deuxième module de communication ;
- au moins une partie d'une mémoire volatile (381) ;
- au moins un registre (382) ; et
- au moins un premier circuit (383) adapté à rendre actif ledit module de communication en champ proche (34), dans lequel lorsque le dispositif électronique (30) est allumé et lorsque le dispositif de communication en champ proche (34) est dans un mode de veille, alors le groupe composé de ladite au moins une partie d'une mémoire volatile (381), dudit au moins un registre (382), et dudit au moins un premier circuit (383) est alimenté par une première tension d'alimentation dudit au moins un deuxième module de communication du dispositif (30).

## Description

### Domaine technique

La présente description concerne de façon générale les systèmes et dispositifs électroniques, et l'alimentation en énergie de ces systèmes et dispositifs. La présente description se rapporte, plus particulièrement, aux dispositifs électroniques adaptés à la communication en champ proche (Near Field Communication, NFC), et à l'adaptation des moyens d'alimentation de tels dispositifs électroniques.

### Technique antérieure

Les communications sans fil sont de plus en plus utilisées de nos jours pour différentes applications telles que des échanges d'informations, des paiements bancaires, des échanges d'énergie, etc. Il existe plusieurs types de communication sans fil, par exemple, les communications en champ proche (Near Field Communication, NFC), les communications utilisant des hautes fréquences à plus longue distance comme les communications Bluetooth, etc.

Il serait souhaitable de pouvoir améliorer au moins en partie certains aspects des dispositifs connus adaptés à la technologie de communication en champ proche.

### Résumé de l'invention

Il existe un besoin pour des dispositifs adaptés à la technologie de communication en champ proche consommant moins d'énergie.

Un mode de réalisation pallie tout ou partie des inconvénients des dispositifs connus adaptés à la technologie de communication en champ proche.

Un mode de réalisation prévoit un dispositif adapté à la technologie de communication en champ proche consommant moins d'énergie.

Un mode de réalisation prévoit un dispositif électronique comprenant :
- un premier module de communication en champ proche ;
- au moins un deuxième module de communication ;
- au moins une partie d'une mémoire volatile ;
- au moins un registre ; et
- au moins un premier circuit adapté à rendre actif ledit module de communication en champ proche,
   dans lequel lorsque le dispositif électronique est allumé et lorsque le dispositif de communication en champ proche est dans un mode de veille, alors le groupe composé de ladite au moins une partie d'une mémoire volatile, dudit au moins un registre, et dudit au moins un premier circuit est alimenté par une première tension d'alimentation dudit au moins un deuxième module de communication du dispositif.

Un autre mode de réalisation prévoit un procédé d'alimentation d'un dispositif électronique comprenant :
- un premier module de communication en champ proche ;
- au moins un deuxième module de communication ;
- au moins une partie d'une mémoire volatile ;
- au moins un registre ; et
- au moins un premier circuit adapté à rendre actif ledit module de communication en champ proche, dans lequel lorsque le dispositif électronique est allumé et lorsque le dispositif de communication en champ proche est dans un mode de veille, alors le groupe composé de ladite au moins une partie d'une mémoire volatile, dudit au moins un registre, et dudit au moins un premier circuit est alimenté par une première tension d'alimentation dudit au moins un deuxième module de communication du dispositif.

Selon un mode de réalisation, ledit au moins un premier circuit comprend un bus de communication interne dudit dispositif, et/ou une machine d'état adaptée à détecter l'état dudit premier module.

Selon un mode de réalisation, ledit dispositif comprend des circuits d'alimentation comprenant une batterie, au moins un premier régulateur de tension, et au moins un noeud transmettant la première tension d'alimentation dudit au moins un deuxième module de communication du dispositif.

Selon un mode de réalisation, lorsque le dispositif électronique est allumé et lorsque le premier module de communication en champ proche est actif, alors tous les circuits du dispositif, avec lequel le premier module est adapté à communiquer, sont alimentés par le premier régulateur de tension, le premier régulateur de tension étant adapté à fournir une deuxième tension d'alimentation égale à la première tension d'alimentation à partir d'une troisième tension d'alimentation fournie par la batterie.

Selon un mode de réalisation, lorsque le dispositif est éteint et lorsque le module de communication en champ proche est actif, alors tous les circuits du dispositif, avec lequel le premier module est adapté à communiquer, sont alimentés par le premier régulateur de tension.

Selon un mode de réalisation, lorsque ledit premier module de communication en champ proche est inactif alors aucun des circuits du dispositif, avec lequel le premier module est adapté à communiquer, n'est alimenté par un module d'alimentation.

Selon un mode de réalisation, ladite première tension d'alimentation est comprise entre 1 et 1,5 V.

Selon un mode de réalisation, lesdits circuits d'alimentation du dispositif comprend, en outre, un deuxième régulateur de tension adapté à fournir une quatrième tension d'alimentation égale à la première tension d'alimentation à partir d'une troisième tension d'alimentation fournie par la batterie.

Selon un mode de réalisation, le premier régulateur de tension fournit un premier courant égal à au moins dix fois une deuxième courant fournit par le deuxième régulateur de tension.

Selon un mode de réalisation, lorsque le dispositif est éteint et lorsque le premier module de communication en champ proche est dans un mode de veille, alors tous les circuits du dispositif, avec lequel le premier module est adapté à communiquer, sont alimentés par le deuxième régulateur de tension.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de communication en champ proche ;
la figure 2 représente, de façon très schématique et sous forme de blocs, un mode de réalisation d'un dispositif adapté à la technologie de communication en champ proche ;
la figure 3 représente, de façon schématique, sous forme de blocs, et d'une façon plus détaillée une partie du mode de réalisation de la figure 2 ;
la figure 4 représente un schéma électrique, partiellement sous forme de blocs, d'un mode de réalisation d'un module d'alimentation du dispositif de la figure 2 ; et
la figure 5 représente un schéma électrique, partiellement sous forme de blocs, d'un autre mode de réalisation d'un module d'alimentation du dispositif de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles et technologies de communication en champ proche (Near Field Communication, NFC) ne seront pas détaillés de façon exhaustive ci-après.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

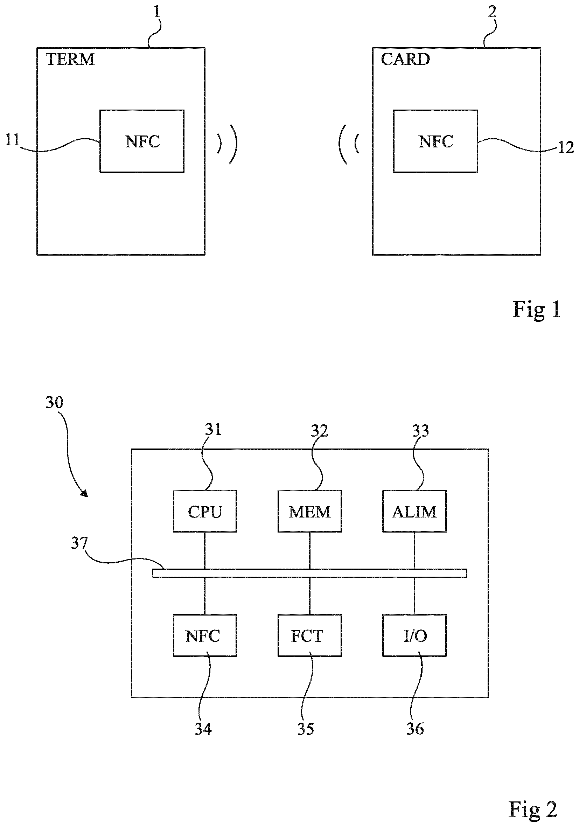

La figure 1 représente schématiquement une communication sans fil, et plus particulièrement, une communication en champ proche entre des dispositifs électroniques 1 (TERM) et 2 (CARD).

Les technologies de communication en champs proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (transpondeur ou carte).

Dans les systèmes récents, un même dispositif peut opérer en mode carte ou en mode lecteur (par exemple dans le cas d'une communication en champ proche entre deux téléphones mobiles). Il est alors fréquent que les dispositifs soient alimentés par batteries et que leurs fonctions et circuits soient mis en veille pour ne pas consommer d'énergie entre des périodes d'utilisation. Les dispositifs doivent alors être « réveillés » quand ils se trouvent à portée l'un de l'autre.

On suppose le cas des deux dispositifs électroniques 1 et 2, dans lequel, par exemple, le dispositif 1 est un terminal, ou lecteur, et le dispositif 2 un transpondeur, mais tout ce qui va être décrit s'applique plus généralement à tout système dans lequel un transpondeur capte un champ électromagnétique rayonné par un lecteur, borne ou terminal.

Selon les applications, pour une communication, un des dispositifs fonctionne en mode dit lecteur tandis que l'autre fonctionne en mode dit carte, ou les deux dispositifs communiquent en mode poste à poste (peer to peer - P2P). Chaque dispositif comporte divers circuits électroniques 11 (NFC) et 12 (NFC), ou modules NFC 11 et 12, de génération d'un signal radiofréquence émis à l'aide d'une antenne d'un circuit oscillant/résonnant. Le champ radiofréquence généré par l'un des dispositifs 1 ou 2 est capté par l'autre dispositif 2 ou 1 qui se trouve à portée et qui comporte également une antenne. Dans certaines applications, lorsqu'un dispositif n'est pas en cours de communication, il est commuté en mode veille afin de réduire l'énergie consommée. Cela est en particulier le cas pour les dispositifs alimentés par batterie. Lorsque le premier dispositif 1 émet un champ électromagnétique pour initier une communication avec le deuxième dispositif 2, ce champ est capté par ce deuxième dispositif 2 dès qu'il se trouve à portée. Ce champ est détecté par les circuits 12 du deuxième dispositif 2 qui, s'ils sont en veille, sont réactivés. Cela se traduit par une variation de la charge constituée par les circuits du deuxième dispositif 2 sur le circuit résonant de génération du champ du premier dispositif. En pratique, la variation correspondante de phase ou d'amplitude du champ émis est détectée par le premier dispositif 1 qui entame alors un protocole de communication NFC avec le deuxième dispositif 2. Côté premier dispositif 1, on détecte en pratique si l'amplitude de la tension aux bornes du circuit 12 résonnant descend en dessous d'un seuil ou si la tension aux bornes du circuit résonnant présente un déphasage supérieur à un seuil. Une fois que le premier dispositif 1 a détecté la présence du deuxième dispositif 2 dans son champ, il entame une procédure d'établissement de communication, mettant en oeuvre des émissions de requêtes par le premier dispositif 1 et de réponses par le deuxième dispositif 2.

Pendant une communication en champ proche, les dispositifs 1 et 2 sont disposés à portée l'un de l'autre. Plus précisément, le dispositif 2 est positionné à portée du dispositif 1 afin de pouvoir capter le champ électromagnétique du dispositif 1. A titre d'exemple, le dispositif 2 est positionné à une distance généralement inférieure à 10 cm du terminal 1. Selon un autre exemple, le dispositif 2 est en contact mécanique avec le terminal 1.

Le dispositif 1 est un terminal qui peut être, par exemple, fixe ou mobile. C'est le dispositif 1 qui est en charge d'amorcer la communication. A titre d'exemple, le terminal 1 est un terminal de paiement ou un téléphone mobile.

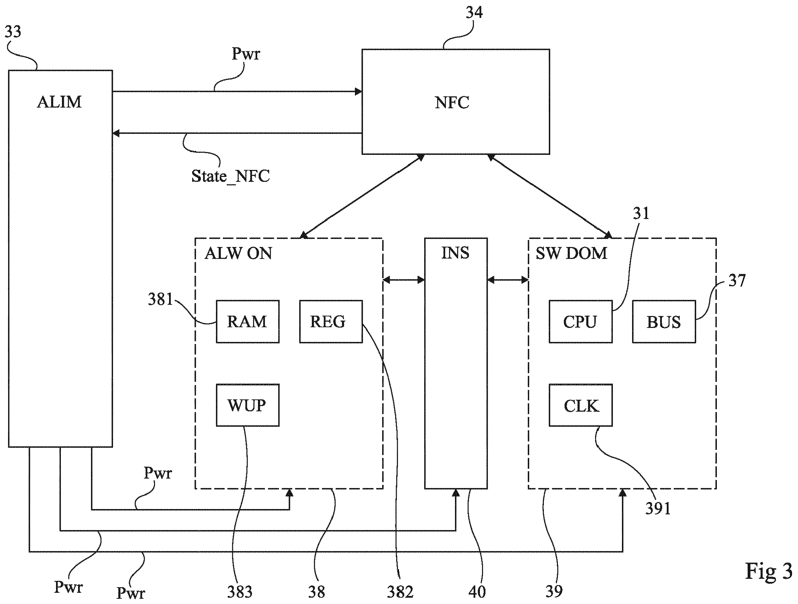

Le dispositif 2 est un transpondeur généralement mobile. Selon un mode de réalisation préféré, le transpondeur 2 est une carte à microcircuits (ou carte à puce), par exemple une carte bancaire ou une carte de transport. A titre de variante, le transpondeur 2 pourrait être un téléphone mobile ou un objet connecté. Le dispositif 2 comprend différents circuits électroniques adaptés à mettre en oeuvre diverses commandes envoyées par le dispositif 1, comme par exemple, des circuits d'authentification, des circuits de cryptographie, etc. En particulier, ces différents circuits consomment plus ou moins d'énergie pendant l'exécution d'une commande envoyée par le dispositif 1. Le dispositif 2 peut comprendre plusieurs modes d'alimentation différents dans lesquels certains circuits sont alimentés en énergie tandis que d'autres ne le sont pas, ces différents modes d'alimentation sont décrits plus en détails en relation avec les figures 2 et 3.

La figure 2 est un schéma bloc représentant, très schématiquement et sous forme de blocs, un exemple d'architecture d'un mode de réalisation d'un dispositif électronique 30 du type du dispositif 1 ou du dispositif 2 décrit en relation avec la figure 1. Autrement dit, le dispositif électronique 30 peut être un transpondeur adapté à mettre en oeuvre une communication sans fil, par exemple une communication en champ proche (NFC).

Le dispositif électronique 30 comprend un processeur 31 (CPU) adapté à mettre en oeuvre différents traitements de données stockées dans des mémoires et/ou fournies par d'autres circuits du dispositif 30.

Le dispositif électronique 30 comprend, en outre, différents types de mémoires 32 (MEM), parmi lesquelles au moins une mémoire volatile et au moins un registre, généralement plusieurs registres. Le dispositif 30 peut comprendre, en outre et selon un exemple, une mémoire non volatile, et une mémoire morte. Chaque mémoire est adaptée à stocker différents types de données. Les registres sont, plus particulièrement, adaptés à stocker des données spécifiques comme des données d'état du dispositif 30. Par données d'état, on entend ici des données qui informent sur l'état du dispositif 30, ou de ces circuits et composants.

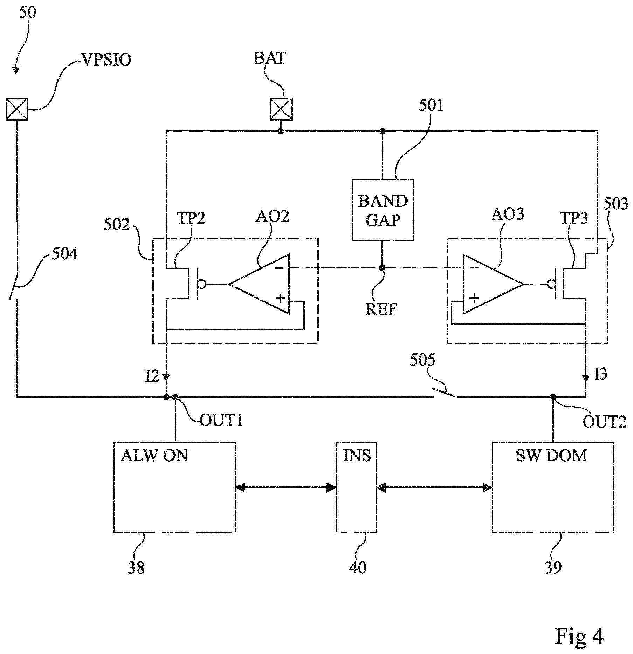

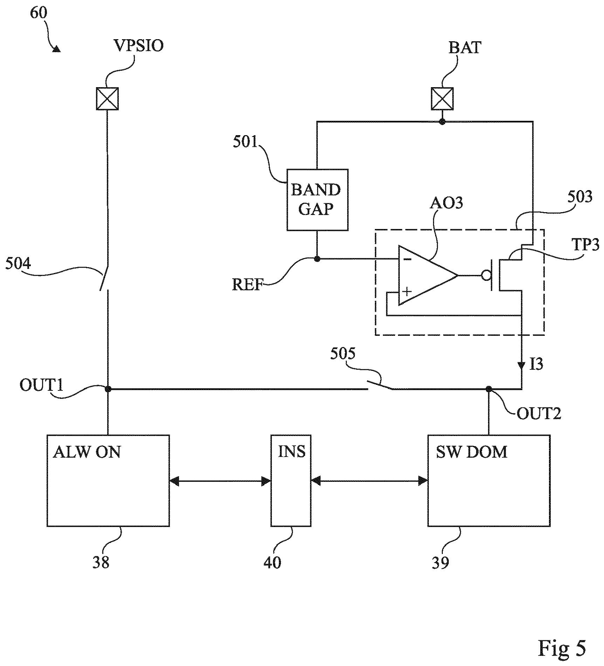

Le dispositif électronique 30 comprend, en outre, des circuits 33 (ALIM) d'alimentation. Les circuits 33 gèrent l'alimentation électrique des différents circuits et composants du dispositif 30. Les circuits 33 comprennent, par exemple, une batterie, des moyens de recharge de la batterie, des circuits d'adaptation de tension, comme des régulateurs de tension, etc. Des modes de réalisation d'un des circuits d'alimentation sont décrits en relation avec les figures 4 et 5.

Le dispositif électronique 30 comprend, en outre, des circuits 34 (NFC) adaptés à mettre en oeuvre une communication en champ proche, ou module 34 de communication en champ proche, ou module NFC 34. Le module NFC 34 comprend, par exemple, des circuits oscillants/résonnants, des circuits d'émission et de réception de données, des circuits de conversion de données, etc.

Le dispositif électronique 30 comprend, en outre, des circuits 35 (FCT) adaptés à mettre en oeuvre différentes fonction du dispositif 30. Les circuits 35 sont diverses, et peuvent comprendre des circuits de mesures, des circuits d'analyse de données, des capteurs, etc.

Le dispositif électronique 30 comprend, en outre, des circuits 36 (I/O) d'entrée et de sortie du dispositif 30. Les circuits 36 comprennent des connecteurs permettant au dispositif 30 d'émettre et de recevoir des données, des dispositifs d'affichage, etc.

Comme dit précédemment, les circuits 33 sont adaptés à gérer l'alimentation en énergie, en tension et en courant, des différents circuits et composants du dispositif 30. Selon un mode de réalisation, les circuits 33 comprennent au moins un circuit tout particulièrement adapté à gérer les différents modes d'alimentation des différents circuits et composants du dispositif 30. En effet, tout ou partie des circuits et composant du dispositif 30 peuvent avoir plusieurs modes d'alimentation différents, comme, par exemple, un mode d'alimentation pleine puissance et un mode d'alimentation basse puissance.

Ces différents modes d'alimentation peuvent être mis en oeuvre automatiquement lorsque le dispositif 30 est dans une certaine configuration, ou dans un certain mode de fonctionnement. Le dispositif 30 comprend au moins deux modes de fonctionnement. Le dispositif 30 peut être allumé ou éteint. Lorsque le dispositif 30 est allumé, tous ses circuits et composants peuvent être utilisés, et peuvent être alimentés par les circuits d'alimentation 33. Lorsque le dispositif 30 est éteint, tous ses circuits et composants sont censés être mis hors tension, mais certains, comme le module NFC 34, sont alimentés, par exemple avec une puissance moindre pour réduire la consommation en énergie. Le mode de fonctionnement du dispositif 30 peut être choisi par un utilisateur du dispositif 30.

Par ailleurs, les différents modes d'alimentation de certains circuits et composants du dispositif 30 peuvent avoir une influence sur les modes d'alimentation, ou sur l'alimentation, d'autres circuits et composants du dispositif 30. En particulier, et selon un mode de réalisation, le module NFC 34 présentent plusieurs modes d'alimentation qui influent sur le mode d'alimentation, et sur l'alimentation, de circuits et composants du dispositif 30.

Le module NFC 34 comprend au moins trois modes d'alimentation : un mode d'alimentation actif, un mode d'alimentation de veille, et un mode d'alimentation inactif. Lorsque le module NFC 34 est dans le mode d'alimentation actif, autrement dit que le module NFC 34 est actif, le module NFC 34 est disponible pour être utilisé à tout moment. Tous les circuits et composants compris dans le module NFC 34 sont susceptibles d'être alimentés, c'est dans ce mode que le module NFC 34 est susceptible de consommer le plus d'énergie. Lorsque le module NFC 34 est dans le mode d'alimentation de veille, autrement dit que le module NFC est en veille, le module NFC 34 est censé pouvoir assurer un service comprenant moins de fonctionnalités, et donc seule une partie des circuits compris dans le module NFC 34 est susceptible d'être alimentée. Dans ce mode, le module NFC 34 consomme, généralement, moins d'énergie que dans le mode d'alimentation actif. Lorsque le module NFC 34 est dans le mode d'alimentation inactif, ou mode d'hibernation, autrement dit lorsque le module NFC 34 est inactif, seule une partie minimale des circuits du module NFC 34 est susceptible d'être alimentée. C'est dans ce mode d'alimentation que le module NFC 34 consomme le moins d'énergie.

De plus, de même que le dispositif 30, le module NFC 34 présente plusieurs modes de fonctionnement, et peut être allumé ou éteint. Le mode de fonctionnement du module NFC 34 peut être choisi, par exemple manuellement, par un utilisateur du dispositif 30.

Les différents modes d'alimentation du module NFC 34 peuvent être mis dans différentes configuration d'utilisation du dispositif 30. Le mode actif du module NFC 34 peut être mis en oeuvre lorsque le module NFC 34 est allumé, que le dispositif 30 soit allumé ou éteint, le module NFC étant adapté à commander au moins partiellement le système d'alimentation du dispositif 30. Le mode veille du module NFC 34 peut être mis en oeuvre lorsque le dispositif 30 est allumé, et que le module NFC 34 est allumé. Le mode inactif peut être mis en oeuvre lorsque le module NFC 34 est éteint, que le dispositif 30 soit allumé ou éteint, ou alors lorsque le module NFC 34 est allumé mais que le dispositif 30 est éteint.

La mise en oeuvre des différents modes d'alimentation des circuits influe sur l'alimentation de certains circuits et composants du dispositif 30. Cela est décrit plus en détails en relation avec la figure 3.

La figure 3 est un schéma bloc représentant, très schématiquement et sous forme de blocs, un exemple d'architecture d'une partie du dispositif électronique 30 décrit en relation avec la figure 2. La figure 3 illustre, plus particulièrement, le module NFC 34 et ses interactions avec les autres circuits et composants du dispositif 30.

Le module NFC 34 est adapté à interagir avec différents circuits et composants du dispositif 30.

Le module NFC 34 est alimenté par une puissance Pwr fournie par les circuits d'alimentation 33 (ALIM), et sont adaptés à fournir au moins des informations d'états State_NFC aux circuits d'alimentation 33, par exemple par l'intermédiaire du bus 37 non représenté en figure 3. Plus particulièrement, le module NFC 34 est adapté à informer les circuits d'alimentation du mode d'alimentation dans lequel il fonctionne à un moment donné. Ainsi, les circuits d'alimentation 33 sont adaptés à prendre en compte le mode d'alimentation du module NFC 34 pour alimenter d'autres circuits et composants dispositif 30. Des modes de réalisation détaillés des circuits 33 sont décrits en relation avec les figures 4 et 5.

Le module NFC 34 est, en outre, adapté à interagir avec des circuits et composants du dispositif 30 répartis en deux groupes : le groupe "toujours actif" 38 (ALW ON) et le groupe 39 "facultatif" (SW DOM).

Le groupe "toujours actif" 38 comprend les circuits et composants du dispositif 30 nécessaires pour assurer un fonctionnement minimal du module NFC 34. Les circuits et composants du groupe 38 sont alimentés par la puissance Pwr fournie par les circuits 33. Selon un mode de réalisation, le groupe "toujours actif" 38 comprend, au moins :
- au moins une partie d'une mémoire volatile 381 comprise dans les mémoires 32 du dispositif 30 ;
- plusieurs registres 382 compris dans les mémoires 32 du dispositif 30, et adaptés à stocker des variables d'état du dispositif 30 ;
- des circuits 383 (WUP) adaptés à rendre actif le module NFC 34.

Les circuits 383 comprennent, par exemple, un bus de communication interne, comme un bus I2C (Inter-Integrated Circuit), une machine d'état adaptée à indiquer qu'un champ de communication sans fil a été détecté, ou adapté à émettre un champ de communication sans fil.

Le groupe "facultatif" 39 comprend les circuits et composants du dispositif 30 utilisés pour assurer un fonctionnement normal du module NFC 34, mais qui ne sont pas nécessaires pour assurer le fonctionnement minimal du module NFC 34. Les circuits et composants du groupe 38 sont alimentés par la puissance Pwr fournie par les circuits 33. Selon un mode de réalisation, le groupe "facultatif" 39 comprend, au moins :
- le processeur 31 du dispositif 30 ;
- le bus 37 de communication du dispositif 30 ; et
- des circuits de génération de signaux d'horloge 391 (CLK) du dispositif 30.

En pratique, une partie majoritaire de, voire tous, les circuits et composants du dispositif 30 sont formés sur un même plaque ou sur un même substrat. Les circuits et composants des groupes "toujours actif" 38 et "facultatif" 39 sont isolés les uns des autres par des circuits d'isolation 40 (INS). Les circuits d'isolation 40 sont, par exemple, alimentés par les circuits 33 avec la puissance Pwr. Selon une variante, les circuits d'isolation 40 n'ont pas besoin d'être alimentés.

Lorsque le module NFC 34 est actif, les circuits et composants des groupes "toujours actif" 38 et "facultatif" 39 sont alimentés par les circuits 33, en reçoivent la puissance Pwr. Le dispositif 30 peut être en mode carte dans une communication en champ proche, mais aussi, par exemple, en mode lecteur.

Lorsque le module NFC 34 est en veille, seuls les circuits et composants du groupe "toujours actif" 38 sont alimentés par les circuits 33, en reçoivent la puissance Pwr. Les circuits et composants du groupe "facultatif" 40 ne sont pas alimentés, et ne reçoivent pas la puissance Pwr. Le dispositif 30 peut seulement être en mode carte dans une communication en champ proche, par exemple en ayant accès aux dernières variables d'état du dispositif 30, mais ne peut pas être dans un mode lecteur.

Lorsque le module NFC 34 est inactif, aucun des circuits et composants des groupes "toujours actif" 38 et "facultatif" 40 ne sont alimentés, et ne reçoivent la puissance Pwr. Le dispositif 30 ne peut être dans un mode carte ou dans un mode lecteur. Selon un mode de réalisation, le module NFC 34 du dispositif 30 peut, par exemple, tout de même, détecter la présence d'un champ.

La figure 4 est un schéma électrique, partiellement sous forme de blocs, d'un mode de réalisation d'un circuit d'alimentation 50 faisant partie des circuits d'alimentation 33 décrits en relation avec les figures 2 et 3. Le circuit d'alimentation 50 est adapté à alimenter les groupes "toujours actif" 38 et "facultatif" 39 décrits en relation avec la figure 3.

Le circuit d'alimentation 50 est représenté relié aux groupes "toujours actif" 38 et "facultatif" 39, qui sont eux-mêmes reliés au circuit d'isolation 40, pour faciliter la description. Les groupes 38 et 39, et le circuit d'isolation 40 ne font pas partie du circuit 50.

Le circuit d'alimentation 50 comprend deux noeuds de sortie OUT1 et OUT2. Le noeud OUT1 permet d'alimenter les circuits et composants du groupe "toujours actif" 38, et le noeud OUT2 permet d'alimenter les circuits et composants du groupe "facultatif" 39. Les noeuds OUT1 et OUT2 fournissent, tous deux, une même tension d'alimentation VPS, référencée à un potentiel de référence, par exemple la masse, non représenté en figure 4, aux groupes "toujours actif" 38 et "facultatif" 39. Selon un exemple, de réalisation, la tension VPS est comprise entre 1 et 5 V, par exemple comprise entre 1 et 1,5 V, par exemple de l'ordre de 1,25 V.

Le circuit d'alimentation 50 comprend deux noeuds d'entrée BAT et VPSIO. Le noeud BAT fournit une puissance électronique provenant d'une batterie des circuits 33. Plus particulièrement, le noeud BAT fournit une tension d'alimentation VBAT supérieure à la tension VPS. La tension VBAT est par exemple supérieure à 1,5 V, par exemple de l'ordre de 2,5 V. Selon un exemple, la tension VBAT est référencée à un potentiel de référence, par exemple la masse. Selon un mode de réalisation, le noeud VPSIO est un noeud d'alimentation utilisé pour alimenter des noeuds de communication du module NFC 34. Plus particulièrement, le noeud VPSIO est adapté à alimenter un circuit de communication interne du dispositif 30, c'est-à-dire un circuit de communication du dispositif 30 différent du module NFC du dispositif 30. Le noeud VPSIO est adapté à fournir directement la tension VPS, c'est-à-dire sans avoir besoin d'utiliser un circuit régulateur de tension. Selon un exemple, le noeud VPSIO ne fournit pas de tension lorsque le dispositif 30 est éteint.

Le circuit d'alimentation 50 comprend, en outre, un circuit 501 régulateur de tension à bande interdite. Le circuit 501 comprend un noeud d'entrée relié, de préférence connecté, au noeud BAT, et un noeud de sortie relié, de préférence connecté, à un noeud REF. Le circuit 501 fournit une tension de référence à partir de la tension délivré par la batterie au niveau du noeud BAT.

Le circuit d'alimentation 50 comprend, en outre, deux régulateurs de tension 502 et 503. Les régulateurs de tension 502 et 503 comprennent chacun deux noeuds d'entrée reliés, de préférence connectés, au noeud BAT et REF. Le régulateur de tension 502, respectivement 503, comprend un noeud de sortie relié, de préférence connecté, au noeud de sortie OUT1, respectivement OUT2. Les régulateurs de tension 502 et 503 sont dimensionnés pour fournir, à partir de la tension délivrée par le noeud BAT, la tension VPS. Le régulateur de tension 502 est dimensionné pour fournir, sur le noeud OUT2, un courant I2 inférieur au courant I3 fourni par le régulateur de tension 503 sur le noeud OUT3. Selon un exemple, le courant I2 est au moins dix fois inférieur au courant I3. Selon un exemple, le courant I2 est de l'ordre de 2 mA, et le courant I3 est de l'ordre de 60 mA.

Chaque régulateurs de tension 502, 503 comprend un transistor TP2, TP3, et un amplificateur opérationnel AO2, AO3. Selon un exemple, les transistors TP2 et TP3 sont des transistors à effet de champ à grille métal-oxyde à canal P, aussi appelé transistors PMOS.

Une première borne de conduction du transistor TP2 est reliée, de préférence connectée, au noeud BAT, et une deuxième borne de conduction du transistor TP2 est reliée, de préférence connectée, au noeud OUT1. La grille du transistor TP2 est reliée, de préférence connectée, à une sortie de l'amplificateur opérationnel AO2. L'amplificateur opérationnel AO2 comprend une entrée inverseuse (-) reliée, de préférence connectée, au noeud REF, et une entrée non inverseuse (+) reliée, de préférence connectée, au noeud OUT2.

Une première borne de conduction du transistor TP3 est reliée, de préférence connectée, au noeud BAT, et une deuxième borne de conduction du transistor TP3 est reliée, de préférence connectée, au noeud OUT1. La grille du transistor TP3 est reliée, de préférence connectée, à une sortie de l'amplificateur opérationnel AO3. L'amplificateur opérationnel AO3 comprend une entrée inverseuse (-) reliée, de préférence connectée, au noeud REF, et une entrée non inverseuse (+) reliée, de préférence connectée, au noeud OUT3.

Le circuit 50 comprend, en outre, deux interrupteurs 504 et 505 adaptés à définir par quel noeud d'entrée du circuit 50, les groupes 38 et 39 sont alimentés. L'interrupteur 504 relie, de préférence connecte, les noeuds VPSIO et OUT1. L'interrupteur 505 relie, de préférence connecte, les noeuds OUT1 et OUT2. Les interrupteurs 504 et 505 sont commandés par des signaux (non représentés en figure 4) dont les valeurs sont définies par les différents modes d'alimentation du module NFC 34.

Le fonctionnement du circuit 50 est le suivant.

Lorsque le dispositif 30 est allumé, et que le module NFC 34 est actif, tous les circuits et composants des groupes "toujours actif" 38 et "facultatif" 39 sont alimentés par la batterie. L'interrupteur 505 est alors passant, et l'interrupteur 504 ne conduit pas. Cette configuration est la même, si le dispositif 30 est éteint, et si les circuits 34 sont dans un mode d'alimentation actif.

Selon une variante de réalisation, Lorsque le dispositif 30 est allumé, et que le module NFC 34 est actif, tous les circuits et composants des groupes "toujours actif" 38 et "facultatif" 39 sont alimentés par le noeud VPSIO. L'interrupteur 504 est alors passant, et l'interrupteur 505 ne conduit pas.

Lorsque le dispositif 30 est allumé, et que le module NFC 34 est en veille, seuls les circuits et composants du groupe "toujours actif" 38 sont alimentés, et sont alimentés par le noeud VPSIO. Les circuits et composants du groupe "facultatif" 39 ne sont pas alimentés. L'interrupteur 504 est alors passant, et l'interrupteur 505 ne conduit pas.

Lorsque le dispositif 30 est éteint, et que le module NFC 34 est en veille, seuls les circuits et composants du groupe "toujours actif" 38 sont alimentés, et ils sont alimentés par la batterie. Les circuits et composants du groupe "facultatif" 39 ne sont pas alimentés. Les interrupteurs 504 et 505 ne conduisent pas.

Lorsque que le module NFC 34 est inactif, que le dispositif 30 soit allumé ou éteint, les circuits et composants des groupes "toujours actif" 38 et "facultatif" 39 ne sont pas alimentés.

Un avantage de ce mode de réalisation est qu'utiliser le noeud VPSIO pour alimenter les circuits et composants du groupes "toujours actif" 38 quand le dispositif 30 est allumé et quand le module 34 sont dans un mode d'alimentation actif, permet de diminuer la consommation électrique du dispositif 30. En effet, ce mode de réalisation permet de ne pas utiliser le régulateur de tension 502, et donc d'économiser sa consommation en courant. Selon un exemple de réalisation, ce mode de réalisation de réalisation permet de réduire la consommation en courant d'environ 15 µA, et de faire passer la consommation d'environ 35 µA à environ 20 µA.

La figure 5 est un schéma électrique, partiellement sous forme de blocs, d'un mode de réalisation d'un circuit d'alimentation 60 faisant partie des circuits d'alimentation 33 décrits en relation avec les figures 2 et 3. Le circuit d'alimentation 60 est adapté à alimenter les groupes "toujours actif" 38 et "facultatif" 39 décrits en relation avec la figure 3.

Le circuit 60 est similaire et présente des éléments communs au circuit 50 décrit en relation avec la figure 4. Les éléments communs aux circuits 60 et 50 ne sont pas décrits en détail de nouveau ici, et seules les différences entre les circuits 50 et 60 sont mises en exergue.

Comme le circuit d'alimentation 50, le circuit d'alimentation 60 est représenté relié aux groupes "toujours actif" 38 et "facultatif" 39 décrits en relation avec la figure 3, qui sont eux-mêmes reliés au circuit d'isolation 40, pour faciliter la description. Ces groupes 38 et 39, et le circuit d'isolation 40 ne font pas partie du circuit 50.

A la différence du circuit 50, le circuit 60 ne comprend que le régulateur de tension 503, et ne comprend pas le régulateur de tension 502. L'alimentation par le régulateur de tension 502 est remplacée par l'alimentation par le noeud VPSIO.

Le fonctionnement du circuit 60 est le suivant.

Lorsque le dispositif 30 est allumé, et que le module NFC 34 est actif, tous les circuits et composants des groupes "toujours actif" 38 et "facultatif" 39 sont alimentés par la batterie. L'interrupteur 505 est alors passant, et l'interrupteur 504 ne conduit pas. Cette configuration est la même, si le dispositif 30 est éteint, et si les circuits 34 sont dans un mode d'alimentation actif.

Selon une variante de réalisation, Lorsque le dispositif 30 est allumé, et que le module NFC 34 est actif, tous les circuits et composants des groupes "toujours actif" 38 et "facultatif" 39 sont alimentés par le noeud VPSIO. L'interrupteur 504 est alors passant, et l'interrupteur 505 ne conduit pas.

Lorsque le dispositif 30 est allumé, et que le module NFC 34 est en veille, seuls les circuits et composants du groupe "toujours actif" 38 sont alimentés, et sont alimentés par le noeud VPSIO. Les circuits et composants du groupe "facultatif" 39 ne sont pas alimentés. L'interrupteur 504 est alors passant, et l'interrupteur 505 ne conduit pas.

Lorsque le dispositif 30 est éteint, et que le module NFC 34 est en veille, seuls les circuits et composants du groupe "toujours actif" 38 sont alimentés, et sont alimentés par le noeud VPSIO. Les circuits et composants du groupe "facultatif" 39 ne sont pas alimentés. L'interrupteur 504 est alors passant, et l'interrupteur 505 ne conduit pas.

Lorsque le module NFC 34 est dans un mode inactif, que le dispositif 30 soit allumé ou éteint, les circuits et composants des groupes "toujours actif" 38 et "facultatif" 39 ne sont pas alimentés.

Selon une variante de réalisation, Lorsque le dispositif 30 est allumé, et que le module NFC 34 est inactif, seuls les circuits et composants du groupe "toujours actif" 38 sont alimentés, et sont alimentés par le noeud VPSIO. Les circuits et composants du groupe "facultatif" 39 ne sont pas alimentés. L'interrupteur 504 est alors passant, et l'interrupteur 505 ne conduit pas.

Un avantage de ce mode de réalisation est qu'il permet d'économiser la place occupée par le régulateur de tension 502. Le dispositif 30 peut être, dans ce cas, un dispositif de l'internet des objets, c'est-à-dire un objet connecté.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (30) comprenant :
- un premier module de communication en champ proche (34) ;
- au moins un deuxième module de communication ;
- au moins une partie d'une mémoire volatile (381) ;
- au moins un registre (382) ; et
- au moins un premier circuit (383) adapté à rendre actif ledit module de communication en champ proche (34), dans lequel lorsque le dispositif électronique (30) est allumé et lorsque le dispositif de communication en champ proche (34) est dans un mode de veille, alors le groupe composé de ladite au moins une partie d'une mémoire volatile (381), dudit au moins un registre (382), et dudit au moins un premier circuit (383) est alimenté par une première tension d'alimentation (VPS) dudit au moins un deuxième module de communication du dispositif (30).

2. Procédé d'alimentation d'un dispositif électronique (30) comprenant :
- un premier module de communication en champ proche (34) ;
- au moins un deuxième module de communication ;
- au moins une partie d'une mémoire volatile (381) ;
- au moins un registre (382) ; et
- au moins un premier circuit (383) adapté à rendre actif ledit module de communication en champ proche (34), dans lequel lorsque le dispositif électronique (30) est allumé et lorsque le dispositif de communication en champ proche (34) est dans un mode de veille, alors le groupe composé de ladite au moins une partie d'une mémoire volatile (381), dudit au moins un registre (382), et dudit au moins un premier circuit (383) est alimenté par une première tension d'alimentation (VPS) dudit au moins un deuxième module de communication du dispositif (30).

3. Dispositif selon la revendication 1 ou procédé selon la revendication 2, dans lequel ledit au moins un premier circuit (383) comprend un bus de communication interne dudit dispositif, et/ou une machine d'état adaptée à détecter l'état dudit premier module (34).

4. Dispositif selon la revendication 1 ou 3 ou procédé selon la revendication 2 ou 3, dans lequel ledit dispositif (30) comprend des circuits d'alimentation (33 ; 50 ; 60) comprenant une batterie, au moins un premier régulateur de tension (503), et au moins un noeud (VPSIO) transmettant la première tension d'alimentation (VPS) dudit au moins un deuxième module de communication du dispositif (30).

5. Dispositif ou procédé selon la revendication 4, dans lequel lorsque le dispositif électronique (30) est allumé et lorsque le premier module de communication en champ proche (34) est actif, alors tous les circuits du dispositif (30), avec lequel le premier module (34) est adapté à communiquer, sont alimentés par le premier régulateur de tension (503), le premier régulateur de tension (503) étant adapté à fournir une deuxième tension d'alimentation égale à la première tension d'alimentation (VPS) à partir d'une troisième tension d'alimentation (VBAT) fournie par la batterie.

6. Dispositif ou procédé selon la revendication 4 ou 5, dans lequel lorsque le dispositif (30) est éteint et lorsque le module de communication en champ proche (34) est actif, alors tous les circuits du dispositif (30), avec lequel le premier module (34) est adapté à communiquer, sont alimentés par le premier régulateur de tension (503).

7. Dispositif ou procédé selon l'une quelconque des revendications 4 à 6, dans lequel lorsque ledit premier module de communication en champ proche (34) est inactif alors aucun des circuits du dispositif (30), avec lequel le premier module (34) est adapté à communiquer, n'est alimenté par un module d'alimentation (30 ; 50 ; 60).

8. Dispositif selon l'une quelconque des revendications 1, 3 à 7 ou procédé selon l'une quelconque des revendications 2 à 7, dans lequel ladite première tension d'alimentation (VPS) est comprise entre 1 et 1,5 V.

9. Dispositif ou procédé selon l'une quelconque des revendications 4 à 8, dans lequel lesdits circuits d'alimentation (50) du dispositif (30) comprend, en outre, un deuxième régulateur de tension (502) adapté à fournir une quatrième tension d'alimentation égale à la première tension d'alimentation (VPS) à partir d'une troisième tension d'alimentation (VBAT) fournie par la batterie.

10. Dispositif ou procédé selon la revendication 9, dans lequel le premier régulateur de tension (503) fournit un premier courant (I3) égal à au moins dix fois une deuxième courant (I2) fournit par le deuxième régulateur de tension (502) .

11. Dispositif ou procédé selon la revendication 9 ou 10, dans lequel lorsque le dispositif (30) est éteint et lorsque le premier module de communication en champ proche (34) est dans un mode de veille, alors tous les circuits du dispositif (30), avec lequel le premier module (34) est adapté à communiquer, sont alimentés par le deuxième régulateur de tension (503).
